# EUROPÄISCHE PATENTSCHRIFT

(11) **EP 0 427 004 B1**
(45) Veröffentlichungstag und Bekanntmachung des Hinweises auf die Patenterteilung: **15.06.1994**
(21) Anmeldenummer: 90119699.8
(22) Anmeldetag: 15.10.1990
(51) Int. Cl.: B41C 1/14, B41C 1/055

(54) **Vorrichtung zum Bearbeiten von Hohlzylindern mittels eines Lasers**
Apparatus for processing a hollow cylinder with a laser
Appareil pour le traitement d'un cylindre creux avec un laser

(30) Priorität: 07.11.1989 AT 2561/89
(43) Veröffentlichungstag der Anmeldung: 15.05.1991
(60) Teilanmeldung: 93107024.7
(73) Patentinhaber: Schablonentechnik Kufstein Aktiengesellschaft, 6330 Kufstein (AT)
(72) Erfinder: Suchan, Erwin, Thiersee 385 (AT)
(74) Vertreter: TER MEER STEINMEISTER & PARTNER GbR

(56) Entgegenhaltungen:
- EP-A- 0 347 010
- DE-A- 3 601 327

## Beschreibung

Die Erfindung betrifft eine Vorrichtung zum Bearbeiten Hohlzylindern mittels eines Lasers, insbesondere zur Herstellung einer Rundschablone, wobei eine Lagerung für Holzylinder, zum Holzylinder parallele Führungen für eine Laseroptik, auf denen ein die Laseroptik tragender Schlitten beweglich geführt ist, und ein Antrieb für den Schlitten vorhanden sind. Zur Herstellung von Rundschablonen ist es bekannt, auf perforierten Folien einen Fotolack aufzubringen, diesen nach einem bestimmten Muster zu belichten und dann durch Entwicklung des Fotolackes gewünschte Perforationen der Folie freizulegen. Es ist auch geworden, die perforierte Folie mit einem durch Laserstrahl abtragbaren Material zu beschichten und mittels eines fokussierten Laserstrahles bestimmte Perforationen der Folie freizulegen.

Dabei ist es bekannt geworden, den Siebdruckschablonenrohling über eine Welle zu ziehen, die einen entlang der Welle verschiebbaren Stützkörper trägt, wobei die Bewegung des Stützkörpers und des Laserkopfes miteinander koordiniert werden. Bei einer derartigen Einrichtung kann das Einlegen der Siebdruckschablonenrohlinge nicht automatisiert werden, andererseits ist die Abstützung des Siebdruckschablonenrohlings in der Umgebung der vom Laser gerade bearbeiteten Stelle notwendig, um den Brennpunkt des Lasers auf der Oberfläche der Schablone zu halten.

Aus der DE-0S 2 949 953 ist ein Apparat zur Laserperforierung steifer Walzen bekannt, bei dem eine Stützrolle den Laserschneidkopf in einer genauen Distanz zur Walze hält. Diese Stützrolle läßt zwar das Abrollen der Walze ohne Gleiten zu, weist aber keine Stützfunktion für den Querschnitt des Zylinders auf, dadurch kommt es im Bereich des Laserstrahlauftreffpunktes zu unerwünscht großen Verlagerungen des zu gravierenden Musterbildes in Umfangsrichtung. Eine Beeinträchtigung des Bearbeitungsergebnisses entsteht auch bei Verschmutzungen der Schablonenoberfläche. Es ist daher Aufgabe der vorliegenden Erfindung eine Vorrichtung der eingangs erwähnten Art zu finden, die ein automatisches Einlegen der Hohlzylinder erlaubt und demnach eine genaue Bearbeitung des Hohlzylinders gewährleistet.

Erfindungsgemäß wird jetzt vorgeschlagen, daß an der Wandung des Hohlzylinders von außen stützende Abrollelement angeordnet sind und daß im Gravurbereich nahe zu den stützenden Abrollelementen eine Ansaugung für die Schablonenwandung vorgesehen ist. Die Ansaugung verhindert eine Deformation und vor allem eine Bewegung des Schablonenzylinders zur Achse hin. Durch die Abrollelement wird im Bereich um die Gravurstelle eine Auflage bewirkt, so daß der Brennpunkt des Laserstrahles stets genau auf der Oberfläche des Schablonenzylinders liegt und somit eine Bewegung von Achse weg verhindert wird. Außerdem ergibt sich beim Wechseln der Schablonenzylinder der große Vorteil, daß bei die Vorgang der Zylinder nicht über einen Aufnahmedorn oder ähnliches geschoben werden muß beim Umrüsten auf andere Schablonengrößen die Walzen nur verschwenkt werden und nicht ausgetauscht werden müssen. Weiters wird bei der Anlage von Abrollelementen an der Oberfläche des Holzylinders die Gravurstelle gereinigt, wobei das hintere Abrollelement den Abbrand entfernt und das vordere Teilten beseitigt, die den Belichtungsvorgang störend beeinflussen könnten.

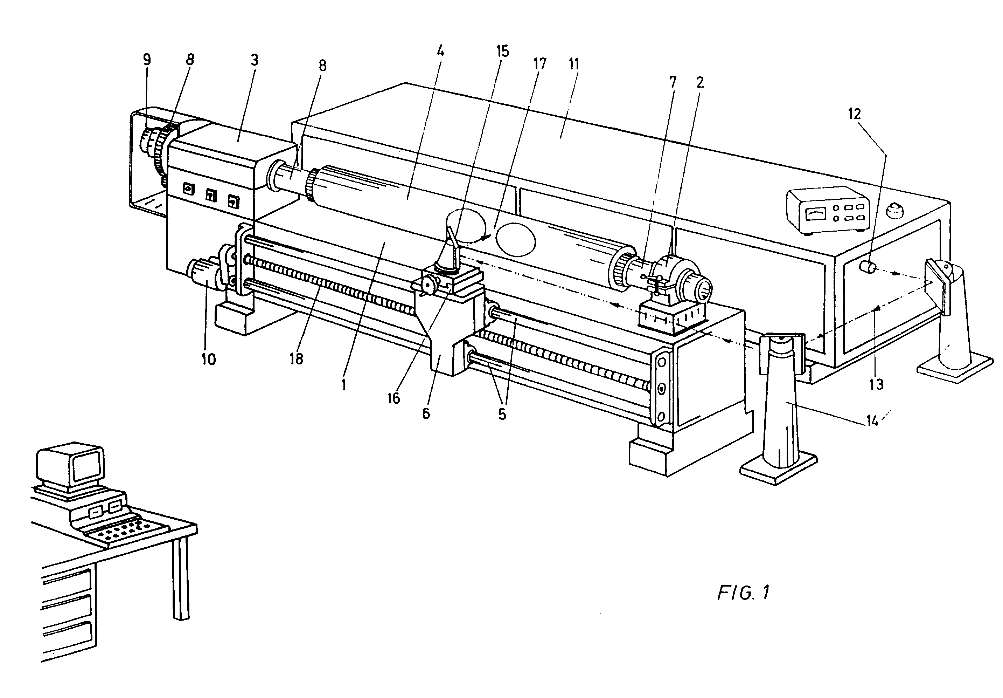

Die Erfindung wird anhand der Zeichnungen näher beschrieben. Fig. 1 zeigt eine Gesamtansicht einer erfindungsgemäßen Vorrichtung zur Herstellung von Rundschablonen. Fig. 2 zeigt die seitliche Halterung des Siebdruckschablonenrohlings durch Stützkegel. Fig. 3 und 4 sind eine Draufsicht bzw. eine Ansicht in Schablonenlängsachse der an der Schablone anliegenden Walzen. Fig. 5 bis 7 zeigen eine andere Ausführungsform der Erfindung und Fig. 8, 9 und 10 je eine weitere Ausführungsform der Erfindung.

Auf einem verwindungs- und biegesteifen Grundkörper 1 sind Lager 2, 3 zum Halten eines Schablonenzylinders 4 vorgesehen. Parallel zur Achse des Schablonenzylinders 4 sind Parallelführungen 5 für einen Führungsschlitten 6 vorgesehen. Die Bedienungsschalter 37 der Vorrichtung sind nur schematisch angedeutet.

Für den Führungsschlitten 6 ist ein Vorschubantrieb 10 vorhanden, zweckmäßigerweise ein Schrittmotor, dessen Schrittzahl so zu wählen ist, daß ein schrittweises Vorrücken des Vorschubschlittens um jeweils 10 »m erfolgen kann. Ein derartiger Schrittmotor 10 treibt eine Schraubspindel 18 an, die mit dem Führungsschlitten 6 in Eingriff steht.

Ein Lasergerät 11 gibt am Laserstrahlausgang 12 einen Laserstrahl 13 ab, der über zwei Umlenkstationen 14 zu einem Umlenkspiegel 15 auf dem Führungsschlitten 6 geleitet wird. Zur Einstellung der Lage des Umlenkspiegels 15 zum Schablonenzylinder ist eine Verstellvorrichtung 16 vorhanden. Der Umlenkspiegel 15 hat die Aufgabe, den parallel zur Achse der Schablone geführten Laserstrahl 13 in eine Richtung senkrecht zur Schablonenwandung umzulenken.

Das auf die Schablone aufzutragende Muster wird in Steuerungsimpulse umgesetzt, was einerseits durch Abtasten einer Vorlage oder durch Einspeicherung in eine elektronische Anlage erfolgen kann. Diese Steuerungsimpulse betätigen entsprechend das Lasergerät und es wird somit punktweise ein Laserstrahl 13 auf die auf dem Schablonenzylinder 4 aufgespannte Schablone gerichtet. Dieser Laserstrahl bewirkt an seiner Auftreffstelle eine Entfernung des die gelochte Folie bedeckenden Materials, so daß hier die Öffnung in der Schablone wiederum freigelegt wird. Auf diese Weise kann Punkt für Punkt das gewünschte Muster auf die Schablone übertragen werden und durch gemeinsame Steuerung des Lasergerätes 11 und des Führungsschlittens 6 kann auch eine Wiederholung des aufzutragenden Musters auf die Schablone in einfacher Weise erfolgen.

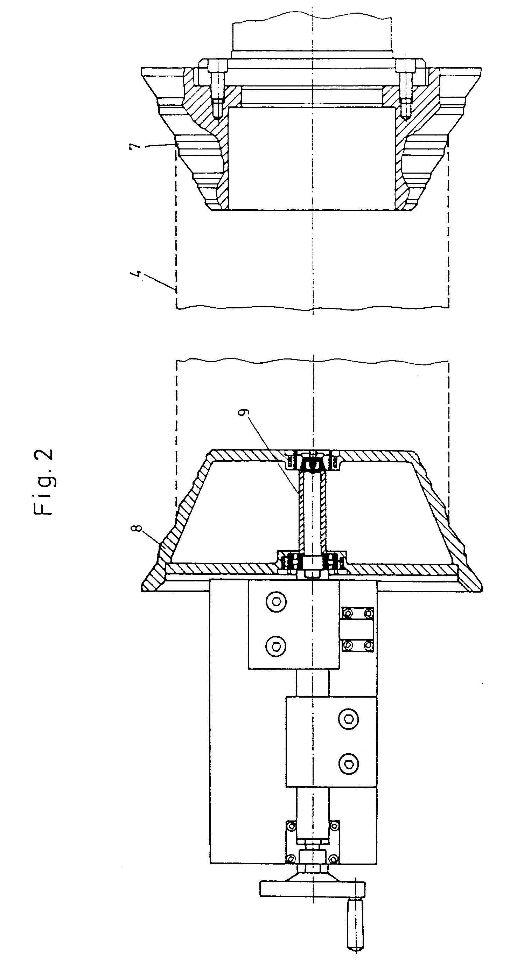

Wie Fig.2 zeigt, sind für die beiden Enden des Schablonenzylinders 4 je ein Stützkegel 7 bzw. 8 vorgesehen. Einer der beiden Stützkegel, z.B.der Stützkegel 8, kann in Richtung der Achse des Schablonenzylinders 4 händisch oder automatisch verstellt werden. Der Stützkegel 7 bzw. 8 hat eine profilierte Fläche, wobei auf diese Profilierungen 23 der Schablonenzylinder 4 aufgesteckt wird. Ferner sind diese Stützkegel 7 und 8 jeweils um einen Stutzen 9 frei drehbar und sie können sich gemeinsam mit dem Schablonenzylinder 4 verdrehen.

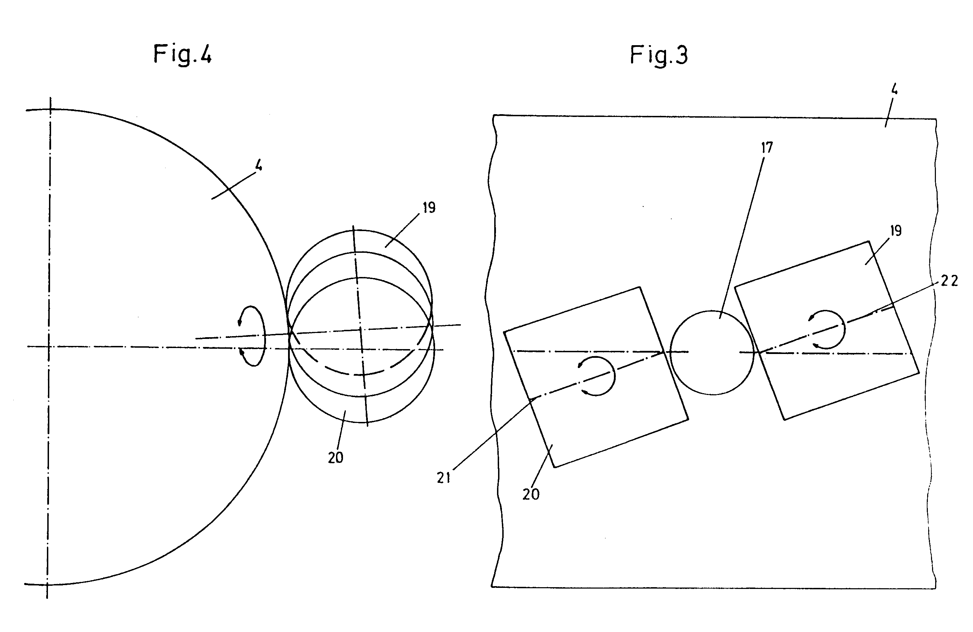

Wie man aus den Fig. 3 und 4 erkennen kann, liegen am Schablonenzylinder 4 Walzen 19, 20 an, deren Achsen 21, 22 gegen den Schablonenzylinder 4 geneigt sind und die eine gekrümmte Mantelkontur aufweisen. Diese Walzen sind im Bereich der Gravurstelle 11 vorgesehen, d.h. jener Stelle, an der der Laserstrahl 13 auf den Schablonezylinder 4 auftrifft. Durch die geneigten Achsen wird bei einer Abwäzbewegung der Walzen 19, 20 am Schablonenzylinder 4 eine axiale Gleitkomponente hervorgerufen, die eine intensive Reinigung der Schablone von anhaftenden Abbrandpartikeln bewirkt. Eine der Walzen besorgt die Entfernung des Abbrandes und die andere entfernt Teilchen, die den Belichtungsvorgang störend beeinflussen könnten. Die Walzen 19, 20 sind nicht fest gegenüber dem Laserkopf sondern können zusätzlich in Richtung der Schablonenachse oszillieren oder schwingen, wodurch die Reinigungswirkung unterstützt wird. Außerdem können sie schwenkbar um eine Achse angeordnet werden, welche sowohl die Schablonenachse als auch die jeweilige Walzenachse unter einem rechten Winkel schneidet, wodurch die Berührkurve zwischen Schablone und Walzen verschieden großen Schablonenradien angepaßt werden kann. Die Walzen 19, 20 können mit einer Oberflächenschicht aus Kunststoff oder Textilmaterial versehen werden, um die Wirkung der Relativbewegung zwischen Walzen 19, 20 und Schablone zu mildern. Durch die Walzen 19, 20 wird im Bereich um die Gravurstelle 17 eine Auflage bewirkt, so daß der Brennpunkt des Laserstrahles 13 stets genau auf der Oberfläche des Schablonenzylinders liegt. Außerdem ergibt sich beim Wechseln der Schablonenzylinder 4 der große Vorteil, daß bei diesem Vorgang der Zylinder nicht über einen Aufnahmedorn oder ähnliches geschoben werden muß und beim Umrüsten auf andere Schablonengrößen die Walzen 19, 20 nur verschwenkt werden und nicht ausgetauscht werden müssen.

Da nur das Verschwenken der Walzen 19, 20 und die Horizontalverstellung eines Stützkegels erfolgen muß, ist es nun sehr einfach,den Schablonenwechsel zu automatisieren.

Zur weiteren Unterstützung der Reinigung, aber unabhängig davon zur Erzwingung der Anlage der Schablonenwandung an den Walzen 19, 20, kann im Bereich der Gravurstelle 17 ein Vakuum zur Anwendung gelangen. Durch dieses wird die Schablone gegen die Walzen 19, 20 gesaugt und eine intensive und genaue Anlage an diesen wird erzwungen, auch dann wenn die Schablone aufgrund innerer Spannungen die Tendenz zeigt, von den Walzen abzuheben. Außerdem unterstützt das Vakuum die Reinigungswirkung, d.h. Partikel, die zufolge der Relativbewegung der Walzen 19, 20 gegenüber der Schablone nur gelockert werden, werden durch die im Vakuumbereich auftretenden Luftströmungen mitgerissen und abgeführt. Ebenso werden auch die bei dem Gravurvorgang abgelösten Partikel durch diese Strömungen weggeführt.

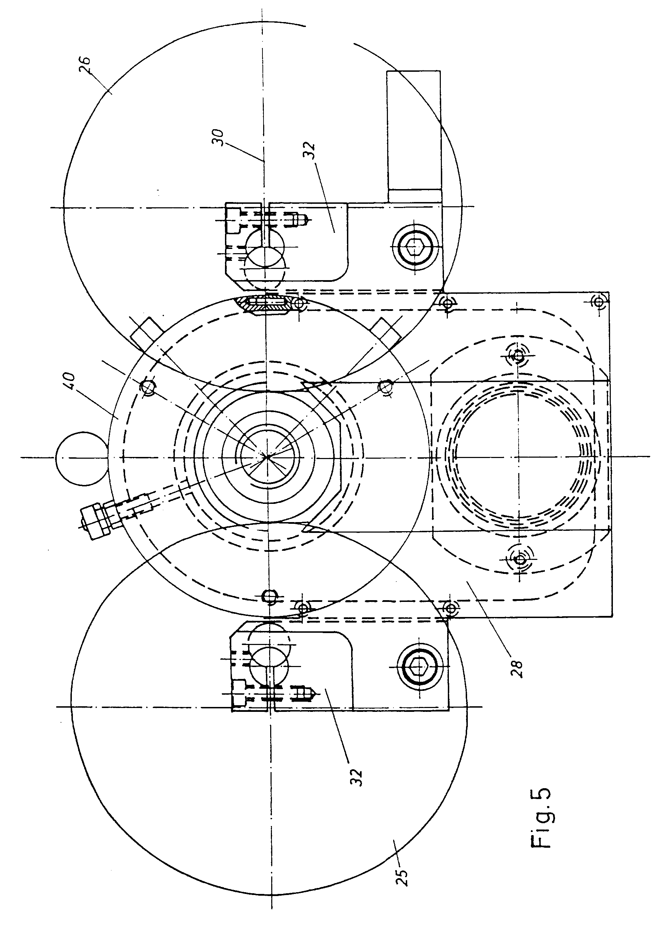

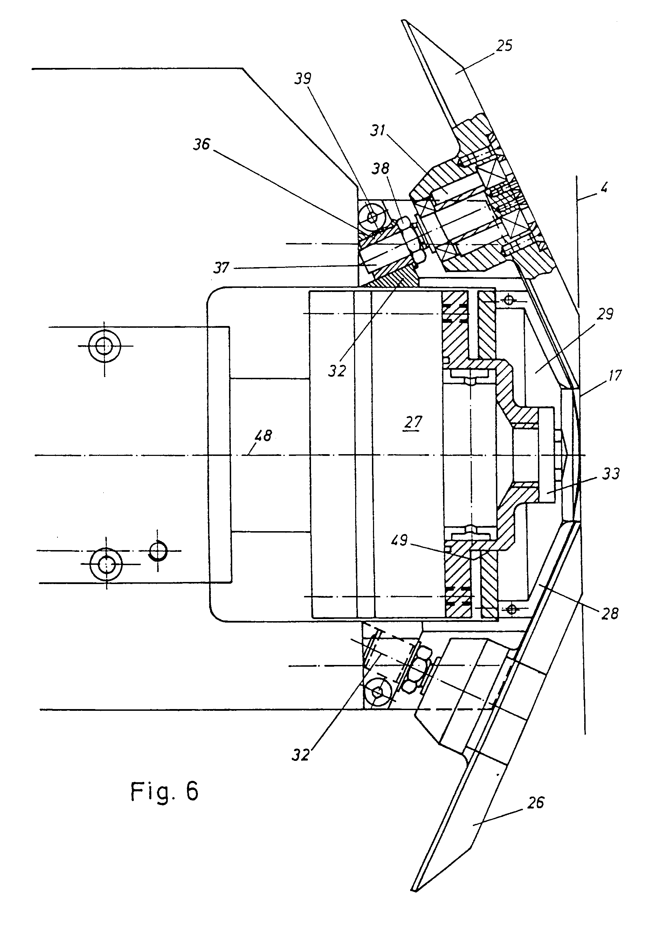

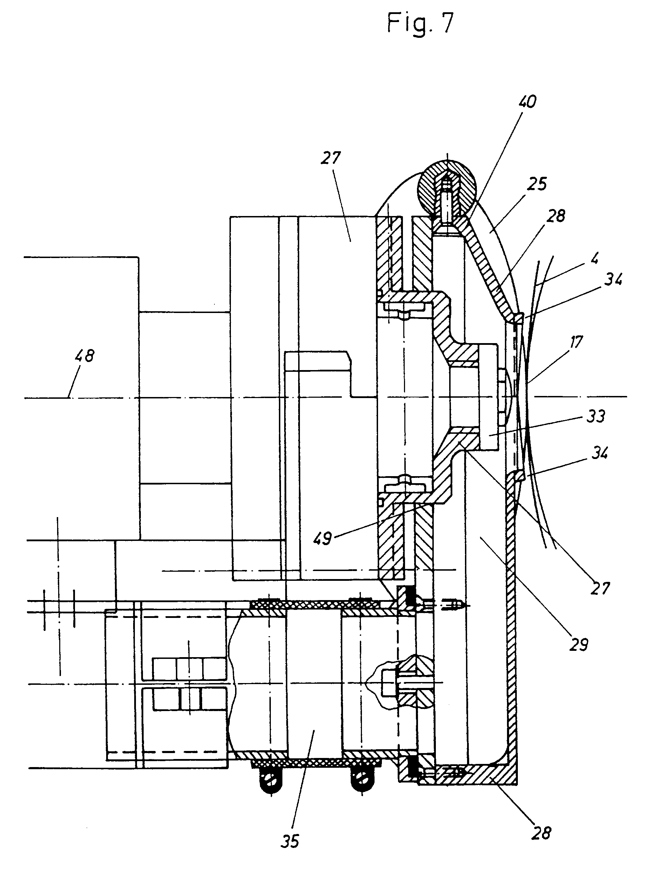

In den Fig. 5 bis 7 ist eine etwas andere Ausgestaltung der erfindungsgemäßen Einrichtung dargestellt. Die Walzen werden hier durch zwei Kegelstützrollen 25, 26 ersetzt. Die Berührung zwischen den Kegelstützrollen 25, 26 und der Schablone 4 erfolgt entlang einer Mantelerzeugenden 30 der Schablone 4. Die konstruktive Gestaltung wird durch Kegelstützrollen 25, 26 einfacher. Bei der Kegelstützrolle 25 ist zu erkennen, daß diese über eine Wälzlagerung 31 am Stützgehäuse 32 befestigt ist.

Der die Gravurarbeit bewirkende Laserstrahl 13 wird über ein im Inneren des Laserschneidkopfes 27 angeordnetes Objektiv fokussiert und verläßt über eine kleine Bohrung im Mündungsstück 33 die innersten Kammern des Laserschneidkopfes 27.

Dem Laserschneidkopf 27 ist ein Vakuumgehäuse 28 vorgelagert. Dieses ist so ausgebildet, daß das Mundstück 33 von dem Vakuumgehäuse 28 umgeben wird. Dadurch wird eine Vakuumkammer 29 ausgebildet, die mit einem Spalt 34 an den Gravurbereich 17 angrenzt. Eine Vakuumleitung 35 saugt Luft aus der Vakuumkammer 29 ab,die über den Spalt 34 nachströmt. Diese Strömungsvorgänge erzwingen eine Druckdifferenz zwischen der Atmosphäre des Arbeitsraumes und der Vakuumkammer 29.

Diese Druckdifferenz zwingt nun die Schablone 4 zur ständigen Anlage an die Kegelstützrollen 25, 26, auch dann wenn die Schablone zufolge einer Deformation ihres sehr dünnen Mantels die Tendenz zeigt, von den Kegelstützrollen 25, 26 abzuheben.

Die Befestigung der Kegelstützrollen 25, 26 im Stützgehäuse 32 erfolgt mittels einer Bundklemmhülse 36. Diese wird mit ihrer zylindrischen Außenmantelfläche in die sie aufnehmende Bohrung eingeführt und dort mittels der Klemmschraube 39 festgeklemmt. In diese Klemmhülse 36 ist der Lagerzapfen 37 mittels eines Gewindes eingeschraubt und wird mit Hilfe der Kontermutter 38 in einer justierbaren Lage gekontert. Auf diese Weise ist es möglich, die Kegelstützrollen 25, 26 vorübergehend zu demontieren, indem die Bundklemmhülse 36 aus ihrer Aufnahmebohrung gezogen wird und später wieder in diese zurückgesteckt wird, wobei der Bund wiederum anschlagen muß, ohne daß die Justierung der Kegelstützrollen 25, 26 verloren geht bzw. nachjustiert werden muß.

Das Vakuumgehäuse 28 ist mit einem abnehmbaren Halbrunddeckel 40 versehen, der das Mündungsstück 33 schnell und leicht zugänglich macht. Das Vakuumgehäuse ist gegenüber dem Laserschneidkopf 27 und dem Mundstück 33 in Richtung der Laserstrahlachse verschiebbar angeordnet, so daß der Fokuspunkt des Laserstrahles unabhängig vom Spalt 34 eingestellt werden kann. Ein sehr eng bemessener Spalt 49 dichtet die Rückwand des Vakuumgehäuses 28 gegenüber dem Laserschneidkopf 27 hinreichend ab.

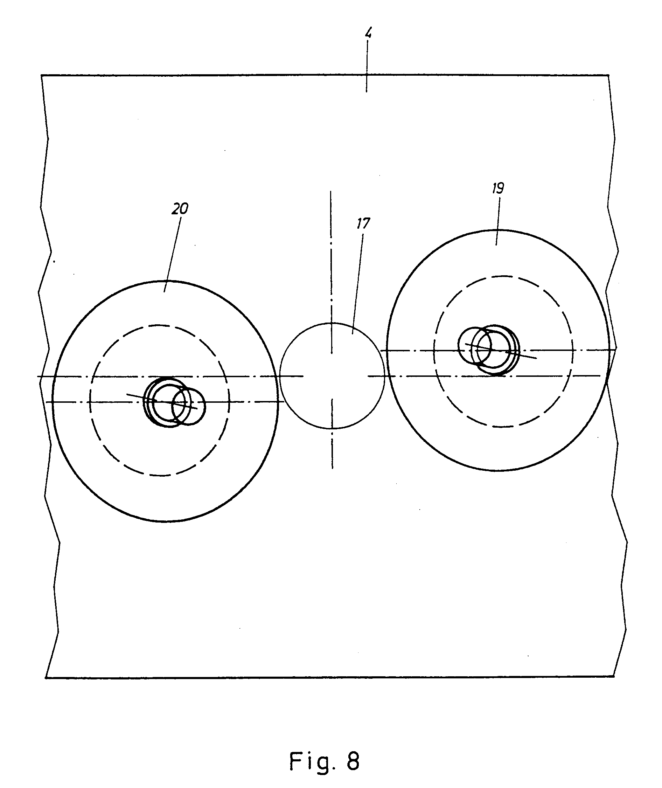

In der Fig.8 ist eine Variation der zuletzt beschriebenen Ausgestaltung der Erfindung dargestellt. Die Achsen 42, 43 der Kegelstützrollen 25, 26 sind hier so angeordnet, daß sie mit der Achse 41 der Schablone 4 zwei unterschiedliche Ebenen aufspannen. Dadurch berührt die Kegelstützrolle 25 die Schablone 4 etwa entlang der Mantel erzeugenden 44, wohingegen die Kegelstützrolle 26 entlang der Mantelerzeugenden 45 die Schablone 4 berührt. Dadurch wird eine konturentreuere Abstützung der Schablone erreicht.

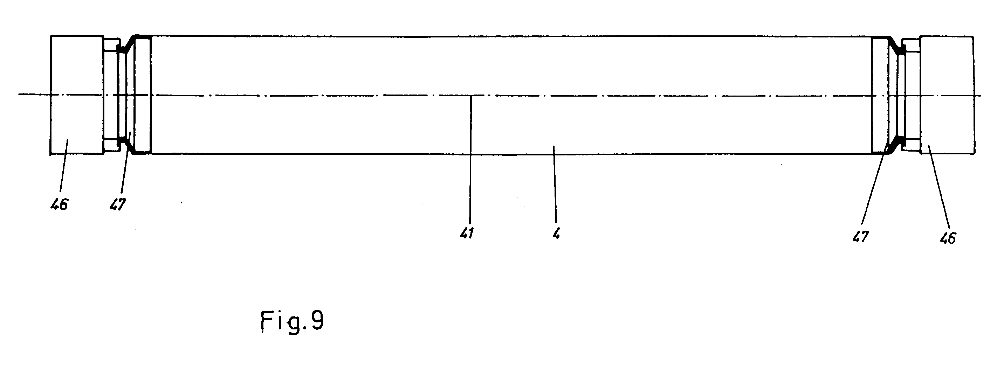

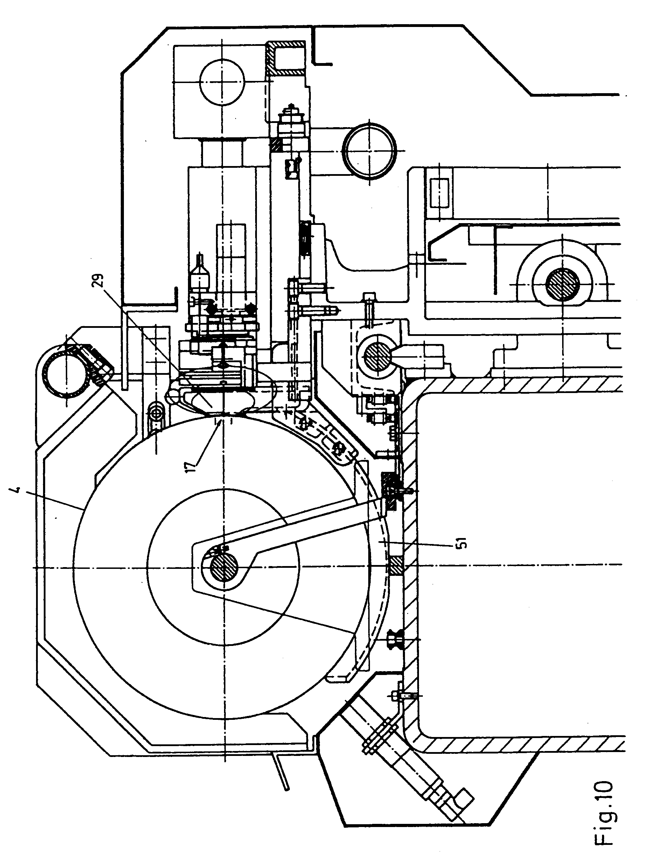

In der Fig.9 wird von einer anderen Ausführung der Schablonenenden ausgegangen und gezeigt, daß dann zweckmäßigerweise andere Einspannvorrichtungen für die Schablonenenden verwendet werden können. Anstelle von Stützkegeln 7, 8, wie sie in Fig.2 zur zentrischen Einspannung von Schablonenenden verwendet worden sind, werden hier für den gleichen Zweck Dreibackenfutter 46, wie diese von Drehbänken der Metallbearbeitung her bekannt sind, verwendet. Auch diese Vorrichtungen sind in der Lage, die Schablonenendstücke 47 mit ausreichender Genauigkeit zu zentrieren. Auch bei dieser Art der Einspannung kann für die genaue Führung der Schablonenwand eine der vorbeschriebenen Einrichtungen (Walzen 19, 20 oder Kegelstützrollen 25, 26) verwendet werden. In der in Fig.10 gezeigten Ausführungsform der Erfindung ist ein ringförmiger Saugluftkanal 51 strömungstechnisch wirksam mit der Vakuumkammer 29 verbunden. Durch diese Maßnahme entsteht über den Bereich dieses Saugluftkanales 51 ebenfalls ein Unterdruck in Relation zum Luftdruck im Arbeitsraum und die dünne Wandung der Schablone 4 wird dadurch infolge des im Saugluftkanal vorgesehenen ringförmigen Spaltes gegenüber der Schablone auch in Umfangsrichtung festgehalten. Eine möglicherweise noch in eben dieser Umfangsrichtung im Gravurbereich 17 wirksame unregelmäßige Schubbewegung der Schablonenwandung, die der normalen Umfangsdrehbewegung überlagert ist und auf kleine Abweichungen von der Zylinderform zurückzuführen ist und die einen geringfügigen Gravierfehler hervorrufen könnte, wird hierdurch im Gravurbereich 17 weitgehend verhindert.

## Patentansprüche

1. Vorrichtung zum Bearbeiten von Hohlzylindern (4) mittels eines Lasers (11, 13, 15), insbesondere zur Herstellung einer Rundschablone, wobei eine Lagerung (7, 8, 46) für den Hohlzylinder (4), zum Hohlzylinder (4) parallele Führungen (5) für eine Laseroptik (15), auf der ein die Laseroptik (15) tragender Schlitten (6) beweglich angeordnet ist, und ein Antrieb (10) für den Schlitten (6) vorhanden sind, dadurch gekennzeichnet, daß an der Wandung des Hohlzylinders (4) von außen stützende Abrollelemente (19,20,25,26) angeordnet sind, und daß im Gravurbereich nahe zu den stützenden Abrollelementen (19, 20, 25, 26) eine Ansaugung für die Schablonenwandung vorgesehen ist.

2. Vorrichtung nach Anspruch 1, dadurch gekennzeichnet, daß als Abrollelemente Walzen (19, 20) vorgesehen sind.

3. Vorrichtung nach Anspruch 2, dadurch gekennzeichnet, daß die Achsen (21, 22) der Walzen (19, 20) gegen den Hohlzylinder (4) geneigt sind und die Mantelkontur der Walzen (19, 20) vorzugsweise konkav gekrümmt ist.

4. Vorrichtung nach Anspruch 1, dadurch gekennzeichnet, daß als Abrollelemente Kegelstützrollen (25, 26) vorgesehen sind, deren Kegelmantelerzeugende mit einer Mantelerzeugenden des Hohlzylinders (4) zusammenfallen.

5. Vorrichtung nach einem der vorhergehenden Ansprüche, dadurch gekennzeichnet, daß der Hohlzylinder (4) an den Abrollelementen (19, 20, 25, 26) in axialer Richtung und in Umfangsrichtung abrollt.

6. Vorrichtung nach einem der vorhergehenden Ansprüche, dadurch gekennzeichnet, daß die Abrollelemente (19, 20, 25, 26) in Bewegungsrichtung des Schlittens (6) vor und hinter der Gravurstelle (17) vorgesehen sind.

7. Vorrichtung nach einem der vorhergehenden Ansprüche, dadurch gekennzeichnet, daß die Abrollelemente (19, 20, 25, 26) in Richtung der Achse des Hohlzylinders (4) schwingend angeordnet sind.

8. Vorrichtung nach einem der vorhergehenden Ansprüche, dadurch gekennzeichnet, daß die Abrollelement (19, 20) schwenkbar sind.

9. Vorrichtung nach einem der vorhergehenden Ansprüche, dadurch gekennzeichnet, daß die Ansaugung ein Vakuumgehäuse (28) aufweist, das gegenüber dem Laserschneidkopf (27) in Richtung der Achse des Laserstrahles unabhängig von diesem verschiebbar ist.

10. Vorrichtung nach einem der vorhergehenden Ansprüche, dadurch gekennzeichnet, daß die Ansaugung eine Vakuumkammer (29) und einen mit dieser strömungstechnisch wirksam verbundenen Saugluftkanal (51) aufweist.

11. Vorrichtung nach Anspruch 10, dadurch gekennzeichnet, daß der Saugluftkanal (51) die untere Hälfte des Hohlzylinders (4) umgreift.

12. Vorrichtung nach einem der vorhergehenden Ansprüche, dadurch gekennzeichnet, daß die Abrollelemente (19, 20, 25, 26) durch einen eigenen Motor angetrieben sind.

13. Vorrichtung nach einem der vorhergehenden Ansprüche, dadurch gekennzeichnet, daß die Mantelkontur der geringfügig konkaven Abrollelemente (19, 20, 25, 26) Teil einer Ellipse oder einer Hyperbel ist.

## Claims

1. Apparatus for machining hollow cylinders (4) by means of a laser (11, 13, 15), in particular for the production of a round template, a bearing (7, 8, 46) for the hollow cylinder (4), guides (5) parallel to the hollow cylinder (4) for laser optics (15), on which a carriage (6) supporting the laser optics (15) is arranged to move, and a drive (10) for the carriage (6) being provided, characterized in that rolling members (19, 20, 25, 26) supported from outside on the wall of the hollow cylinder (4) are provided and that in the engraving region close to the supporting rolling members (19, 20, 25, 26), suction means for the template wall are provided.

2. Apparatus according to Claim 1, characterized in that rollers (19, 20) are provided as the rolling members.

3. Apparatus according to Claim 2, characterized in that the axes (21, 22) of the rollers (19, 20) are inclined towards the hollow cylinder (4) and the surface contour of the rollers (19, 20) is preferably curved in a concave manner.

4. Apparatus according to Claim 1, characterized in that conical support rollers (25, 26) are provided as the rolling members, whereof the generatrices of the cone-shaped shell coincide with a generatrix of the surface of the hollow cylinder (4).

5. Apparatus according to one of the preceding claims, characterized in that the hollow cylinder (4) rolls on the rolling members (19, 20, 25, 26) in the axial direction and in the peripheral direction.

6. Apparatus according to one of the preceding claims, characterized in that in the direction of movement of the carriage (6), the rolling members (19, 20, 25, 26) are provided in front of and behind the engraving point (17).

7. Apparatus according to one of the preceding claims, characterized in that the rolling members (19, 20, 25, 26) are arranged to oscillate in the direction of the axis of the hollow cylinder (4).

8. Apparatus according to one of the preceding claims, characterized in that the rolling members (19, 20) are able to tilt.

9. Apparatus according to one of the preceding claims, characterized in that the suction means comprise a vacuumn housing (28), which is able to move relative to the laser cutting head (27) in the direction of the axis of the laser beam, independently thereof.

10. Apparatus according to one of the preceding claims, characterized in that the suction means comprise a vacuum chamber (29) and a suction air channel (51) connected thereto so that it is effective as regards flow technology.

11. Apparatus according to Claim 10, characterized in that the suction air channel (51) engages around the lower half of the hollow cylinder (4).

12. Apparatus according to one of the preceding claims, characterized in that the rolling members (19, 20, 25, 26) are driven by their own motor.

13. Apparatus according to one of the preceding claims, characterized in that the surface contour of the slightly concave rolling members (19, 20, 25, 26) is part of an ellipse or hyperbola.

## Revendications

1. Dispositif pour le traitement de cylindres creux (4) à l'aide d'un laser (11, 13, 15), en particulier pour la fabrication d'un patron circulaire, comprenant des moyens (7, 8, 46) pour le montage en rotation du cylindre creux (4), des guidages (5) parallèles au cylindre creux (4) pour une optique laser (15), sur lesquels est disposé de façon mobile un chariot (6) portant l'optique laser (15), et des moyens d'entraînement (10) pour le chariot (6), caractérisé par le fait qu'il comprend, en outre, des éléments de roulement (19, 20, 25, 26) exerçant de l'extérieur un effet d'appui pour la paroi du cylindre creux (4), et des moyens d'aspiration pour la paroi du patron, dans la zone de gravure, à proximité des éléments de roulement (19, 20, 25, 26) à effet d'appui.

2. Dispositif suivant revendication 1, caractérisé par le fait que les éléments de roulement sont des rouleaux (19, 20).

3. Dispositif suivant revendication 2, caractérisé par le fait que les axes (21, 22) des rouleaux (19, 20) sont inclinés par rapport au cylindre creux (4) et que la génératrice des rouleaux (19, 20) est de préférence incurvée de façon concave.

4. Dispositif suivant revendication 1, caractérisé par le fait que les éléments de roulement sont des galets d'appui coniques (25, 26) dont les génératrices coincident avec une génératrice du cylindre creux (4).

5. Dispositif suivant l'une des revendications précédentes, caractérisé par le fait que le cylindre creux (4) roule en direction axiale et en direction circonférentielle sur les éléments de roulement (19, 20, 25, 26).

6. Dispositif suivant l'une des revendications précédentes, caractérisé par le fait que les éléments de roulement (19, 20, 25, 26) sont disposés dans la direction de mouvement du chariot (6) en avant et en arrière de l'emplacement de gravure (17).

7. Dispositif suivant l'une des revendications précédentes, caractérisé par le fait que les éléments de roulement (19, 20, 25, 26) sont montés oscillants dans la direction de l'axe du cylindre creux (4).

8. Dispositif suivant l'une des revendications précédentes, caractérisé par le fait que les éléments de roulement (19, 20) sont pivotants.

9. Dispositif suivant l'une des revendications précédentes, caractérisé par le fait que les moyens d'aspiration comprennent une boite à vide (28) qui est déplaçable en translation par rapport à la tête de coupe laser (27), dans la direction de l'axe du rayon laser, indépendamment de ce dernier.

10. Dispositif suivant l'une des revendications précédentes, caractérisé par le fait que les moyens d'aspiration comprennent une boite à vide (29) et un canal d'air d'aspiration (51) communiquant avec cette dernière.

11. Dispositif suivant revendication 10, caractérisé par le fait que le canal d'air d'aspiration (51) entoure la moitié inférieure du cylindre creux (4).

12. Dispositif suivant l'une des revendications précédentes, caractérisé par le fait que les éléments de roulement (19, 20, 25, 26) sont entraînés par un moteur indépendant.

13. Dispositif suivant l'une des revendications précédentes, caractérisé par le fait que la génératrice des éléments de roulement (19, 20, 25, 26) légèrement concaves constitue une partie d'une ellipse ou d'une hyperbole.
